# EUROPEAN PATENT SPECIFICATION

(11) **EP 3 320 148 B1**
(45) Date of publication and mention of the grant of the patent: **14.08.2019**
(21) Application number: 16750514.8
(22) Date of filing: 29.06.2016
(51) Int. Cl.: B01D 35/02, B01D 35/16, B01D 35/30, B01D 29/05, B01D 29/52, C02F 1/00, E02D 19/12, C02F 103/00, E02D 19/06, E02D 19/18

(54) **GROUND WATER FLOW DEVICE AND SYSTEM, METHOD FOR CONTROLLING GROUND WATER FLOW**
GRUNDWASSERSTRÖMUNGSVORRICHTUNG UND SYSTEM, VERFAHREN ZUR STEUERUNG DER GRUNDWASSERSTRÖMUNG
DISPOSITIF ET SYSTÈME D'ÉCOULEMENT SOUTERRAIN, ET PROCÉDÉ DE COMMANDE D'ÉCOULEMENT SOUTERRAIN

(30) Priority: 09.07.2015 NL 2015131; 26.04.2016 NL 2016680
(43) Date of publication of application: 16.05.2018
(73) Proprietor: Profextru Holding B.v., 7772 BJ Hardenberg (NL)
(72) Inventor: HOEKMAN, Henry Jan Ferdinand, 7797 RD Rheezerveen (NL)
(74) Representative: Wijnstra, Reinier
(86) International application number: PCT/NL2016/050459
(87) International publication number: WO 2017/007306

(56) References cited:
- GB-A- 2 258 487
- US-A1- 2014 262 172

## Description

The invention relates to a ground water flow device according to the preamble of claim 1.

A ground water flow device of this type is used to control ground water flows. In particular, the ground water flow device of the current invention is used in situations with a risk that the ground water flow weakens the grounds through which it flows. A typical example is a waterway which is elevated with respect to the surrounding land and wherein ground water flows from the waterway to the lower land through the body of the dyke or the soil underneath a dyke. Such a ground water flow may carry soil particles which leads to an undesired increasing water flow, also known as piping, or to a sagging or even complete breakdown of the dyke. However, a ground water flow device of the current situation is suitable for use in other situations as well, where ground water is allowed to flow, but it is desired that soil particles are not carried by the ground water flow.

GB-2.258.487 discloses a ground water flow device with a sheet-like structure which is designed to be buried in the ground. The embodiment of fig. 4 of GB-2.258.487 comprises a filter formed from any appropriate fabric filter material, and a sheet of impermeable plastics material, the sheet defining an array of apertures. The filter serves to remove silt, grit and the like from the flow.

A disadvantage of the known ground water flow device is that the filter may get blocked after a period of use. Such a blockage may occur unnoticed, but will lead to a diversion of the ground water flow around the ground water flow device. This diverted flow could still carry soil particles in an undesired fashion, which leads to piping, sagging or breakdown as described above. If the blockage is noticed, or if a user aims to avoid the blockage, then the known ground water flow needs to be excavated and replaced.

The invention aims to solve to at least one of these problems, or at least to provide an alternative. In particular, the invention aims to provide a ground water flow device with a prolonged safe operational period.

This aim is achieved by a ground water flow device according to claim 1.

A ground water flow device comprises a support element and a filter element. The filter element has a first side and a second side facing away from the first side. The support element comprises flow apertures which are large enough to allow the passage of water and soil particles, and the filter element comprises pore openings large enough to allow the passage of water and small enough to block the passage of soil particles. The support element is rigid and comprises at least one tube which has a longitudinal direction and an inner space extending in the longitudinal direction. The at least one tube sealingly holds the filter element in the inner space. The filter element extends in the longitudinal direction. The at least one tube is provided with the flow apertures, which are distributed such over a circumference of the tube that a first part of the flow apertures is facing the first side of the filter element and a second part of the flow apertures is facing the second side of the filter element, defining a flow path for ground water from the first part of the flow apertures through the filter element to the second part of the flow apertures.

By providing the filter element inside of the tube, it becomes possible to observe whether the filter element is still water permeable. If the filter element gets blocked, even partially, it will offer more resistance to the ground water flow. This results in a higher water level on one side of the filter element, i.e. the side from where the ground water flows, than the other side of the filter. By observing the water level, and comparing this with earlier water level measurements, it is noted whether the filter is blocked partially or wholly.

It is noted that the ground water flow device of GB-2.258.487 forms a barrier which will permit flow of ground water in one direction through the structure whilst preventing flow in the opposite direction. The ground water flow device of the current invention is not limited to embodiments that are water permeable in one direction, and includes embodiments that are water permeable in one or both directions. It is further noted that the outer surfaces of the device of GB-2.258.487 are formed from a filter material, in contrast to the current invention wherein the filter material is inside the tube.

In an embodiment, at least one end of the at least one tube is provided with a closure for sealingly closing the inner space from an environment of the ground water flow device. Such a closure prevents ground water that has entered the inner space of the tube at one side of the filter to bypass the filter by leaving the tube at an open end. In use, such a closure will be typically at a lower end of the ground water flow device. It is noted that such a closure may not be necessary if the ground water flow device is entered sufficiently deep into the ground and/or into a layer in the ground that is sufficiently water impermeable by itself. However, a closure has the advantage that the ground water flow device may be smaller in cases wherein there is no water impermeable ground layer or such a layer is too low.

In a variant, a closure is provided at an upper end of the ground water flow device. Such a closure prevents soil or other objects entering the inner space from above, for instance when the ground water flow device is provided completely underground. Another effect of such a closure is that it prevents ground water from rising through the tube and exiting the tube at the upper end.

In particular, both ends of the at least one tube are provided with a closure.

In an embodiment, the filter element is exchangeable held in the inner space of the tube, and more in particular comprises a rigid frame and filter material extending within the rigid frame. The support element remains in place, while the filter element is exchangeable in the tube. This makes replacing a blocked filter element much more easy and cost effective.

In an embodiment, the support element has complementary coupling elements for coupling a plurality of ground water flow devices to each other. Such coupling elements offer logistical advantages, as it enables the use of ground water flow devices which are smaller than the required area for ground water flow control.

In particular, the complementary coupling elements extend parallel to the longitudinal direction on opposite sides of the tube. Such an orientation allows a vertical insertion of multiple ground water flow devices into the ground, resulting in a vertical alignment of the relevant tubes.

In particular, the complementary coupling elements are provided with sealing means for sealing the coupling of the plurality of ground water flow devices. This prevents the flow of ground water with soil particles through the complementary coupling elements.

In an embodiment, the ground water flow device comprises a plurality of tubes, and a plurality of filter elements, each tube sealingly holding one of the filter elements and being provided with flow apertures. This results in a larger ground water flow device for a given size of the tubes and related filter elements, while the water flow capacity is increased.

In an embodiment, the support element comprises at least one water impermeable sheet extending parallel to the longitudinal direction and being sealingly connected to an outside part of the at least one tube. This results in a larger ground water flow device for a given size of the tubes and related filter elements.

In particular, the water impermeable sheet extends between and connects two of the plurality of tubes.

In an embodiment, the flow apertures are distributed over part of the length of the tube, in particular a middle part of the length, more in particular the middle part is located in the lower two thirds, in particular the lower half, of the tube. In an embodiment, the flow apertures are distributed over a range starting at least 1 meter, preferably at least 2 meter, from the lower end of the tubes, and ending at most 3 meter, preferably at most 2 meter, from the lower end of the tubes. Having flow apertures distributed over part of the length of the tube has the advantage of controlling the level of the ground water that is let through the ground water flow device. It is advantageous to close the lower part of the ground water flow device to reduce the risk that ground water flows below the ground water flow device, e.g. once the filter element starts getting blocked. Another advantage is that the filter element gets blocked less quickly, as a lower part of the ground water quite often has more soil particles than a higher part. Closing an upper part of the ground water flow device has the advantage that one prevents the ground water flow of coming to close to the surface of the ground.

In an embodiment, the support element is modular. In particular, the modular support element comprises two support element parts, more in particular two identical support element parts. In particular, the modular support element comprises two shells for forming the tube.

The invention further relates to a ground water flow system comprising a plurality of ground water flow devices as defined above and/or in the related independent and dependent claims.

The invention further relates to a ground water flow system comprising at least one ground water flow device as defined above and/or in the related independent and dependent claims, and a water level measuring device for measuring a water level in the tube, preferably for measuring water levels at the first side and the second side of the filter element. Such a water level measuring device allows for a more accurate and/or automated measuring of the water level.

The invention further relates to a method for controlling a ground water flow. The method comprises a step of introducing into the ground at least one ground water flow device as defined above and/or in the related independent and dependent claims.

In particular, the method comprises a step of replacing the filter element while the support element is located in the ground.

In an embodiment, the method comprises a step of measuring a water level in the tube, in particular a step of measuring water levels at the first side and the second side of the filter element. In particular the filter element is replaced if the water level in the tube differs from a reference value. More in particular, the filter element is replaced if the water levels at the first side and the second side of the filter element differ more than a predetermined amount. The predetermined amount may be determined on the basis of laboratory or in situ tests of the filter element.

In particular, the step of replacing the filter element is preceded by a step of removing soil from the inner space of the tube. Removing the soil is possible thanks to the tube, as this prevents the immediate re-entry of soil. After removing the soil, removing the filter element and replacing it by a new or a cleaned filter element is more easy.

More in particular, the step of removing soil from the inner space of the tube is performed by directing a jet flow of water into the inner space of the tube and/or by sucking the soil away.

In an embodiment, during the step of replacing the filter element, the inner space is kept substantially free from soil by inserting water into the inner space of the tube.

Preferred embodiments of the inventive device, system and method are defined in the dependent claims.

The invention, its effects, and advantages will be explained in more detail on the basis of the schematic drawing, in which:
Fig. 1 shows a top view of a first embodiment of a ground water flow device according to the invention;
Fig. 2 shows a side view of the embodiment of fig 1;
Fig. 3 shows a top view of a second embodiment of a ground water flow device according to the invention, without a filter element;
Fig. 4 shows a top view of a third embodiment of a ground water flow device according to the invention, without a filter element;
Fig. 5 shows a top view of a fourth embodiment of a ground water flow device according to the invention, without a filter element;
Fig. 6 shows a top view of a fifth embodiment of a ground water flow device according to the invention, without a filter element;
Fig. 7 shows a top view of a sixth embodiment of a ground water flow device according to the invention, without a filter element;
Fig. 8 shows a top view of a seventh embodiment of a ground water flow device according to the invention, without a filter element; and
Fig. 9 shows a ground water flow system.

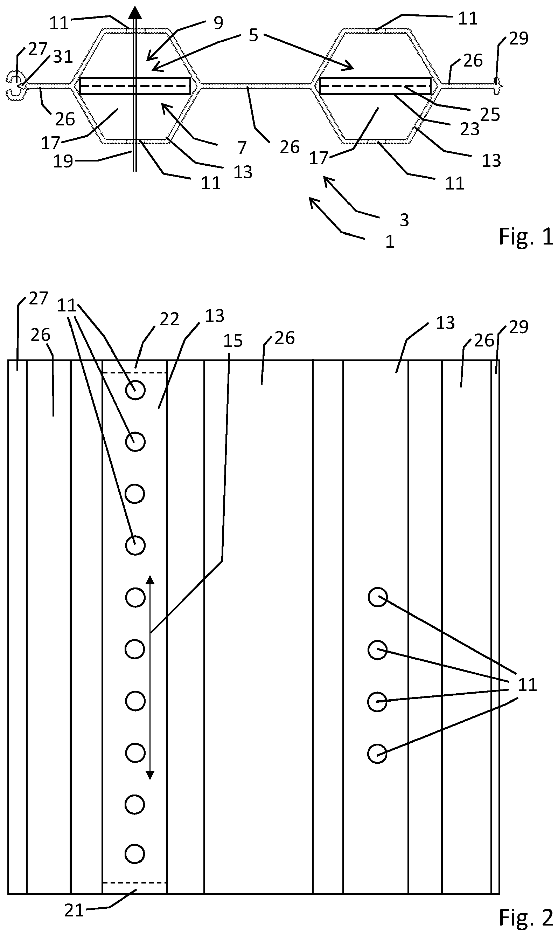

The figures 1 and 2 show a ground water flow device according to the invention, which is denoted in its entirety by reference number 1. The ground water flow device 1 has a support element 3 and a filter element, in this embodiment a filter sheet 5. The filter sheet 5 has a first side 7 and a second side 9 facing away from the first side 7. The support element 3 is rigid, in this embodiment made from plastics by extrusion, and has two tubes 13. The tubes 13 are provided with flow apertures 11 which are large enough to allow the passage of water and soil particles. In this embodiment, the tubes 13 have a hexagonal cross section.

The tubes 13 each have a longitudinal direction 15 and an inner space 17 extending in the longitudinal direction 15. The tubes 13 each hold one of the filter sheets 5 in their inner space 17. The filter sheet 5 extends in the longitudinal direction 15, and is sealingly in contact with the inner side of the tubes 13 along its longitudinal edges. In this embodiment, the filter sheet 5 is exchangeable held in the inner space 17 of the tube 13. Put differently, the connection between the filter sheet 5 and the tubes 13 is sealed against water flow, but is not permanent.

All flow apertures 11 are distributed such over a circumference of the tubes 13 that a first part of the flow apertures 11 is facing the first side 7 of the filter sheets 5 and a second part of the flow apertures 11 is facing the second side 9 of the filter sheets 5, defining in each tube 13 a flow path 19 for ground water from the first part of the flow apertures 11 through the filter sheet 5 to the second part of the flow apertures 11. In an embodiment, the flow apertures 11 are distributed over the full length (in use the height) of the tubes 13, as shown in the left of figure 2. In a preferred variant, the flow apertures 11 are distributed over part of the length, in particular a middle part of the length, e.g. a range starting 2 meter and ending 3 meter from the lower end of the tubes 13, as shown in the right of figure 2. In practice, one flow control flow device will typically have a similar lengthwise distribution of the flow apertures of all tubes, e.g. either the left or the right arrangement of fig. 2. The different arrangements of fig. 2 are just shown in one figure to limit the number of drawings.

Optionally, one, or both ends of the tube 13 are provided with a closure 21, 22 for sealingly closing the inner space 17 from an environment of the ground water flow device 1. This is shown schematically for one tube 13 in fig. 2. It is to be understood that in practice it will be usual for all or none of the tubes 13 to be provided with closures 21, 22. The closures 21, 22 may be a prefabricated separate or integral part of the support element 3, or may be produced after the ground water flow device is inserted into the ground, e.g. by injecting grout into a lower part, respectively upper part, of the tube 13. The closure 21, 22 of this embodiment is a separate part which is attached to the support element via a kit which sealingly attaches the closure 21, 22 to the inside of the tube 13.

In this embodiment, the filter sheet 5 has a rigid frame 23 and filter material 25 extending within the rigid frame 23. The filter sheet 5, in particular the filter material 25, has pore openings large enough to allow the passage of water and small enough to block the passage of soil particles. In this embodiment, the filter material 25 is geotextile with an apparent opening size of 0.150 mm.

In this embodiment, the support element 3 has three water impermeable sheets 26 extending parallel to the longitudinal direction 15. Each of the water impermeable sheets 26 is sealingly connected to an outside part of one or two of the tubes 13. The middle one of the water impermeable sheets 26 extends between and connects the two tubes 13.

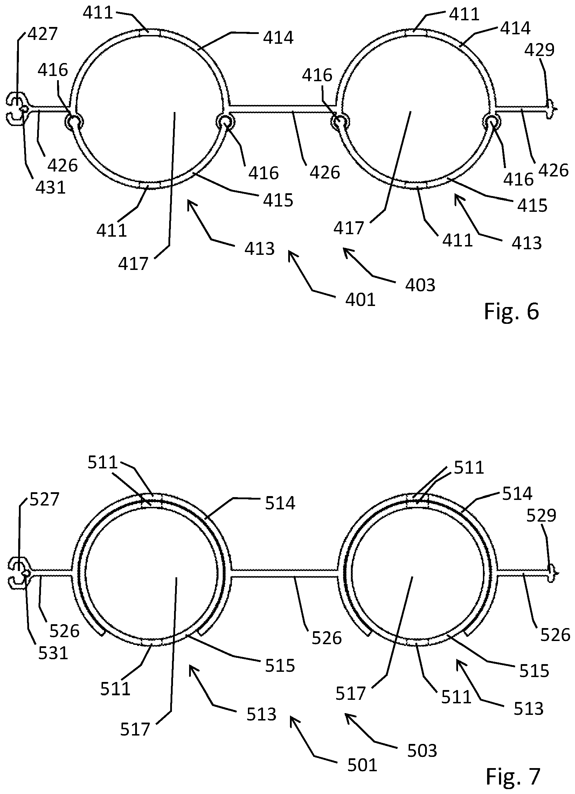

In this embodiment, the support element 3 has complementary coupling elements 27, 29 for coupling a plurality of ground water flow devices 1 to each other (see also fig. 6). The complementary coupling elements 27, 29 extend parallel to the longitudinal direction 15 and on opposite sides of both tubes 13. In this embodiment, the complementary coupling elements 27, 29 are each connected to one of the outer water impermeable sheets 26. Moreover, the complementary coupling elements 27, 29 are provided with sealing means 31 for sealing the coupling of the plurality of ground water flow devices 1.

In this embodiment, the height of the support element 3 is 6 meter, but this can be longer or shorter depending on the characteristics of the ground water flow. The width of the support element 3 is 0.5 meter, and this can be smaller or larger too.

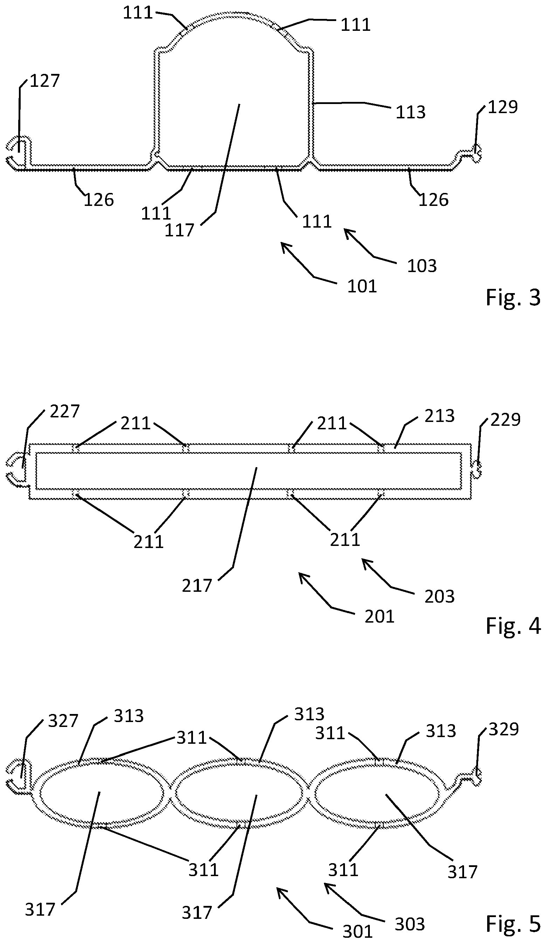

Fig. 3 shows a second embodiment of a support element 103 for a ground water flow device 101. The filter element is not shown and may be the same as or comparable to the filter sheet of the first embodiment, or a differently shaped filter element. The support element 103 is rigid, in this embodiment made from plastics by extrusion, and has one tube 113. The tube 113 is provided with flow apertures 111 which are large enough to allow the passage of water and soil particles. In this embodiment, the tube 113 has a substantially square cross section, with one side being an arc instead of a straight line. The tube 113 has an inner space 117 extending in the longitudinal direction of the tube 113. The tube 113 holds the filter sheet in its inner space 117 in a comparable manner as the first embodiment.

In this embodiment, the support element 103 has two water impermeable sheets 126 extending parallel to the longitudinal direction. Each of the water impermeable sheets 126 is sealingly connected to an outside part of the tube 113. In this embodiment, the support element 103 has complementary coupling elements 127, 129 for coupling a plurality of ground water flow devices 101 to each other, in a comparable manner as the first embodiment. The complementary coupling elements 127, 129 extend parallel to the longitudinal direction and on opposite sides of the tube 113. In this embodiment, the complementary coupling elements 127, 129 are connected to the water impermeable sheets 126.

Fig. 4 shows a third embodiment of a support element 203 for a ground water flow device 201. The filter element is not shown and may be the same as or comparable to the filter sheet of the first embodiment, or a differently shaped filter element. The support element 203 is rigid, in this embodiment made from plastics by extrusion, and has one tube 213. In this embodiment, the tube 213 has a rectangular cross section. The tube 213 is provided with flow apertures 211 which are large enough to allow the passage of water and soil particles. The tube 213 has an inner space 217 extending in the longitudinal direction of the tube 213. The tube 213 holds the filter sheet in its inner space 217 in a comparable manner as the first embodiment.

In this embodiment, the support element 203 has no water impermeable sheets. In this embodiment, the support element 203 has complementary coupling elements 227, 229 for coupling a plurality of ground water flow devices 201 to each other, in a comparable manner as the first embodiment. The complementary coupling elements 227, 229 extend parallel to the longitudinal direction and on opposite sides of the tube 213. In this embodiment, the complementary coupling elements 227, 229 are connected to the tube 213.

Fig. 5 shows a fourth embodiment of a support element 303 for a ground water flow device 301. The filter sheets are not shown and may be the same as or comparable to that of the first embodiment. The support element 303 is rigid, in this embodiment made from plastics by extrusion, and has three tubes 313. In this embodiment, the tubes 313 have an oval cross section. The tubes 313 are provided with flow apertures 311 which are large enough to allow the passage of water and soil particles. The tubes 313 each have an inner space 317 extending in the longitudinal direction of the tubes 313. The tubes 313 each hold the filter sheet in their inner space 317 in a comparable manner as the first embodiment.

In this embodiment, the support element 303 has no water impermeable sheets. In this embodiment, the support element 303 has complementary coupling elements 327, 329 for coupling a plurality of ground water flow devices 301 to each other, in a comparable manner as the first embodiment. The complementary coupling elements 327, 329 extend parallel to the longitudinal direction and on opposite sides of the tubes 313. In this embodiment, the complementary coupling elements 327, 329 are connected to the outer tubes 313.

Fig. 6 shows a fifth embodiment of a support element 403 for a ground water flow device 401. The filter element is not shown and may be the same as or comparable to the filter sheet of the first embodiment, or a differently shaped filter element. The support element 403 is rigid, in this embodiment made from plastics by extrusion, and has two tubes 413. The tubes 413 are provided with flow apertures 411 which are large enough to allow the passage of water and soil particles. In this embodiment, the support element 401, in particular each tube 413, is modular. Each tube 413 comprises a fixed shell 414, a loose shell 415, and complementary shell coupling means 416, in this embodiment complementary male/female shell coupling means 416. The fixed shell 414 is permanently part of the rest of the support element 403, while the loose shell 415 is connected via the complementary male/female shell coupling means 416 to the fixed shell 414 and thus to the rest of the support element 403. This coupling may be done before, during, or after the installation of the support element 403 in the ground, in both cases preferably before the installation of the filter sheet into the tubes 413. Both the fixed shell 414 and the loose shell 415 have a substantially semi-circular cross section. The resulting tube 413 has a substantially round cross section. The tube 413 has an inner space 417 extending in the longitudinal direction of the tube 413. The tube 413 holds the filter sheet in its inner space 417 in a comparable manner as the first embodiment.

In this embodiment, the support element 403 has three water impermeable sheets 426 extending parallel to the longitudinal direction. Each of the water impermeable sheets 426 is sealingly connected to an outside part of one or two of the fixed shell 414 of one of the tubes 413. The middle one of the water impermeable sheets 426 extends between and connects the two tubes 413.

In this embodiment, the support element 403 has complementary coupling elements 427, 429 for coupling a plurality of ground water flow devices 401 to each other, in a comparable manner as the first embodiment. The complementary coupling elements 427, 429 extend parallel to the longitudinal direction and on opposite sides of the tubes 413. In this embodiment, the complementary coupling elements 427, 429 are connected to the outer water impermeable sheets 426. Moreover, the complementary coupling elements 427, 429 are provided with sealing means 431 for sealing the coupling of the plurality of ground water flow devices 401.

Fig. 7 shows a sixth embodiment of a support element 503 for a ground water flow device 501. The filter element is not shown and may be the same as or comparable to the filter sheet of the first embodiment, or a differently shaped filter element. The support element 503 is rigid, in this embodiment made from plastics by extrusion, and has two tubes 513. The tubes 513 are provided with flow apertures 511 which are large enough to allow the passage of water and soil particles. In this embodiment, the support element 503, in particular each tube 513, is modular. Each tube 513 comprises a fixed shell 514, and an insert tube 515. The fixed shell 514 has a partly circular shape, while the insert tube 515 has a substantially round cross section. Both the fixed shell 514 and the insert tube 515 are provided with flow apertures 511. The insert tube 515 is provided with flow apertures 511 on two sides of the insert tube 515, corresponding with two different sides of the ground water flow device 501. In this embodiment, the fixed shell 514 is provided with flow apertures 511 on one side only, as the other side is already partly open due to the part circular cross section of the fixed shell 514. The tube 513, in particular the insert tube 515, has an inner space 517 extending in the longitudinal direction of the tube 513.

The fixed shell 514 is permanently part of the rest of the support element 503, while the insert tube 515 is inserted into the fixed shell 514 and thus connected to the rest of the support element 503. This coupling may be done before, during, or after the installation of the support element 503 in the ground. During insertion of the insert tube 515 care is taken that the flow apertures on one side of the insert tube are aligned with the flow apertures of the fixed shell 514. The tube 513 holds the filter sheet in its inner space 517 in a comparable manner as the first embodiment. The filter sheet may be pre-installed in the insert tube 515 before the insert tube 515 is inserted into the fixed shell 514, or afterwards.

In this embodiment, the support element 503 has three water impermeable sheets 526 extending parallel to the longitudinal direction. Each of the water impermeable sheets 526 is sealingly connected to an outside part of one or two of the fixed shell 514 of one of the tubes 513. The middle one of the water impermeable sheets 526 extends between and connects the two tubes 513.

In this embodiment, the support element 503 has complementary coupling elements 527, 529 for coupling a plurality of ground water flow devices 501 to each other, in a comparable manner as the first embodiment. The complementary coupling elements 527, 529 extend parallel to the longitudinal direction and on opposite sides of the tubes 513. In this embodiment, the complementary coupling elements 527, 529 are connected to the outer water impermeable sheets 526. Moreover, the complementary coupling elements 527, 529 are provided with sealing means 531 for sealing the coupling of the plurality of ground water flow devices 501.

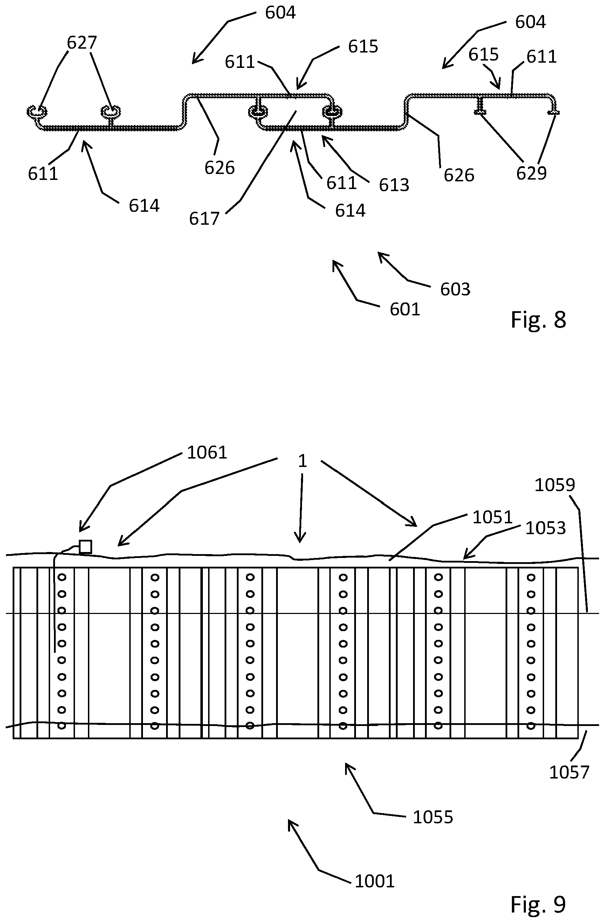

Fig. 8 shows a seventh embodiment of a support element 603 for a ground water flow device 601. The filter element is not shown and may be the same as or comparable to the filter sheet of the first embodiment, or a differently shaped filter element. In this embodiment, the support element 603 is modular and comprises two identical support element parts 604. The support element parts 604 are made from plastics by extrusion. Each support element part 604 has a first shell 614, and a second shell 615. The first and second shell 614, 615 are substantially U-shaped and have the same width, in this embodiment the same shape and dimensions.

The support element 603 is rigid, and has one tube 613 which is formed by joining the first shell 614 of one support element part 604 with a second shell 615 of another support element part 604. The tube 613 has flow apertures 611 which are provided in the first shell 614 and the second shell 615, and are large enough to allow the passage of water and soil particles.

In this embodiment, each support element part 604 has one water impermeable sheet 626 extending parallel to the longitudinal direction. In cross section, each water impermeable sheet 626 has an s-shape. The water impermeable sheet 626 of each support element part 604 is sealingly connected at a first side to an outside part of the first shell 614 and at a second side to an outside part of the second shell 615.

In this embodiment, the support element part 604 has two coupling elements 627, and two complementary coupling elements 629 for coupling two support element parts 604 to each other, and also for coupling a plurality of ground water flow devices 601 to each other. The complementary coupling elements 627, 629 extend parallel to the longitudinal direction. In this embodiment, the two coupling elements 627 are connected to two longitudinal edges of the first shell 614. The two coupling elements 628 are connected to two longitudinal edges of the second shell 615.lt is noted that two support elements parts 604 form one support element 603, as shown in fig. 8. N support element parts 604, with N being an integer greater than 2, and the respective support elements 603 being provided with a filter element, form a system with N-1 ground water flow devices. When a third or subsequent support element part 604 is coupled via the complementary coupling means 627, 629 to an existing support element 603, the coupling of the two respective support element parts 604 results in the coupling of two support elements 603.

Fig. 9 shows a ground water flow system 1001 which is made of a plurality of ground water flow devices, in this case of ground water flow devices 1 as shown in figs. 1 and 2. It is clear however, that such a system could be made of other ground water flow devices, such as ground water flow devices 101, 201, 301, 401,501, or 601. The ground water flow system 1001 is installed in the ground 1051. An upper side 1053 of the ground water flow system 1001 is just below an upper side of the ground 1051, but in an alternative embodiment it is just above the ground 1051. A lower side 1055 of the ground water flow system 1001 is introduced into a ground layer 1057 which is not, or not so good, water permeable. Hence, no closure 21 is required in this embodiment. A ground water level is schematically indicated as 1059. This level is below the upper side 1053 of the ground water flow system 1001.

The ground water flow system has a water level measuring device 1061 (shown only schematically) for measuring water levels in the tube 13 at the first side 7 and the second side 9 of the filter sheet 5. The water level measuring device 1061 has two probes (not shown) both extending in a different half of the tube 13. Multiple water level measuring device 1061 may be provided at different locations, and/or the water level measuring device 1061 may be provided with more than one pair of probes for measuring in more than one tube 13.

In use, a ground water flow system is installed by introducing ground water flow devices one by one into the ground where a ground water flow needs to be controlled. The support element of the ground water flow device may be introduced with, or without, a filter element. In the latter case, the filter element is introduced into the ground water flow device after the installation of the support element. A second and subsequent ground water flow device is installed by coupling the complementary coupling elements and sliding the second or subsequent ground water flow device downwards along the coupling element of the adjacent, already installed, ground water flow device. The introduction into the ground may be done by pushing, vibrating, ramming, or other suitable methods.

After the installation of the ground water flow system is complete, ground water will flow through the flow apertures and filter material from one side of the ground water flow devices to the other. At this point of time, a zero measurement may be made of the water levels in the tubes, on both sides of the filter element. This may be done visually, or with a simple manual measuring device, such as a measuring rod, or with an automated measuring device. Such an automated measuring device may be installed occasionally, or permanently. In the latter case, the working of the ground water flow system may be monitored continuously. The zero measurement will reveal if there is an initial water level difference at both sides of the filter element. If this is the case, the amount will be determined. On the basis of this measurement, a predetermined threshold amount will be determined for the future evaluation of the ground water flow system.

After a predetermined amount of time, or if a continuous or intermittent measurement reveals that the difference in water levels on both sides of the filter element exceed a predetermined amount, the filter elements of the ground water flow system are replaced. Thanks to the invention, this is done without replacing the support elements. The replacement is facilitated by removing soil that may be present in the inner space of the tubes. Such removal is advantageously done by directing a jet stream of water from above into the tubes and/or sucking the soil away. The relevant jet may be lowered into the tubes while the level of the soil reduces. After removal of the soil, the water jet remains in the tube to keep the inner space filled with clean water and thus preventing the re-entry of ground water with soil particles. The filter elements are pulled upwards from the tubes. After cleaning the filter material, or replacing the filter elements by new ones, the filter elements are reintroduced into the tubes.

Several variants are possible within the scope of the attached claims. The features of the above described preferred embodiments may be replaced by any other feature within the scope of the attached claims, such as the features described in other embodiments, and in the following paragraphs.

Support elements of the shown embodiments are made of extruded plastics. The flow apertures are made after the extrusion process, by milling or drilling holes. In alternative embodiments, a metal such as steel is used. The steel is extruded or moulded in another way. Plastic support elements may be moulded in different ways too, such as injection moulding. The requirement that the support element is rigid is to be interpreted in view of the intended use. The support element is rigid enough to be introduced in the intended location with the local characteristics of the ground, which may include stones or other obstacles, and the required installation method. The support element has at least one tube, in some embodiments a plurality of tubes. More or less flow apertures then shown may be provided. The shape and size of the flow apertures are chosen on the basis of the production method and characteristics of the filter element. When moulding a support element, e.g. by injection moulding, any shape flow aperture is feasible. When a support element is extruded, flow apertures are provided after the extrusion process. Round apertures result from drilling, while other shapes are possible by milling, such as oval, slit-like, or polygonal, e.g. triangular, square, or rectangular, flow apertures. The diameter of round, oval, or polygonal flow apertures may be chosen from a range of 1 mm - 30 mm, in particular 5 mm - 15 mm. The apertures may be aligned above each other, or be distributed in a regular or irregular two dimensional pattern. A slit like flow aperture has a width chosen from a range of 1 mm - 30 mm, in particular 5 mm - 15 mm, and a length of 20 mm - 100 mm, preferably 60 mm. In an embodiment, only one slit like flow aperture is provided on one side of the tube. Such a slit like flow aperture is typically longer than 100 mm, as it provides all flow exit or entry at that side of the tube. In particular, the one slit like flow aperture may extend over the full length of the tube.

A water impermeable sheet between tubes and/or between a tube and a coupling element is optional. Water impermeable means that the material of the sheet itself is impermeable to water and that there are no flow apertures provided in the sheet.

Other coupling elements than the shown male/female rails are possible, as long as these provide a reliable connection between two ground water flow devices. Depending on the sealing characteristics of the coupling elements and the soil particle size, additional sealing means may be necessary for the coupling elements.

The filter element may be one piece of material, provided that this is stiff enough for introducing into the tube and keeping a sealing relationship with the inside of the tubes. In an embodiment, the filter element is so thick that it completely, substantially, or partially fills the inner space of the tube. The filter element may have other shapes than a filter sheet. In an embodiment, the filter element has a circular cross section and is in particular a drainage pipe comprising a cylindrical pipe with flow apertures covered with filter material. The pore size of the filter element depends on the soil that needs to be blocked. Apparent opening sizes of the filter material are typically chosen from the range of 0.100-0.600 mm. The filter element is not intended for, and not suitable for, the filtering of harmful substances that are dissolved in the ground water. The expression that the tube sealingly holds the filter element in the inner space is to be understood such that no ground water is able to flow from the first part of the flow apertures to the second part of the flow apertures without passing the filter element. The sealing relationship between filter element and tube may be achieved in different fashions. Just a form fit may be enough in most cases. However, additional sealing means, preferably made of rubber or soft plastic, may be provided in other cases, e.g. if the ground water flow device is used in soil with very fine particles.

In an alternative use, the water level is measured in only one part of the support element, in particular in a part upstream of the filter element. Comparing the water level in this part with reference data, such as historical data, provides an indication whether the filter element is getting blocked with soil particles.

In an embodiment, all tubes are provided with filter elements. In an alternative embodiment, part of the tubes are provided with filter elements, while the other part is provided with piles. These pile increase the strength and bending resistance of the support element and are particular advantageous in combination with plastic support elements. The tubes that are provided with piles are not permeable for water, either because the piles have a form fit with the inner space of the tubes preventing the passage of water, or because these tubes are not provided with flow apertures.

In an embodiment, the lower ends of the tubes are provided with a closure. In another embodiment, the upper ends of the tubes are provided with a closure. In a further embodiment, both the lower ends and the upper ends of the tubes are provided with a closure. In an embodiment, the closure is a separate part which is attached to the support element via a snap connection, screw-thread, or friction. In order to improve the sealing connection, a kit, or a seal, in particular a seal made of rubber or a rubber-like material, may be provided. In an alternative embodiment, a closure is produced by filling a lower, respectively upper space of a tube with a closing material, preferably a closing material which expands after application, such as grout, bentonite or polyurethane foam. In particular, a bulkhead is placed on top of the filter and the closing material is provided on top of the bulkhead.

## Claims

1. Ground water flow device comprising a support element (3) and a filter element (5), wherein the filter element (5) has a first side (7) and a second side (9) facing away from the first side (7), the support element (3) comprises flow apertures (11) which are large enough to allow the passage of water and soil particles, and the filter element (5) comprises pore openings large enough to allow the passage of water from the first side (7) to the second side (9) and small enough to block the passage of soil particles, **characterised in that**
the support element (3) is rigid and comprises at least one tube (13) which has a longitudinal direction (15) and an inner space (17) extending in the longitudinal direction (15), wherein the at least one tube (13) sealingly holds the filter element (5) in the inner space (17), the filter element (5) extending in the longitudinal direction (15), and the at least one tube (13) is provided with the flow apertures (11), which are distributed such over a circumference of the tube (13) that a first part of the flow apertures (11) is facing the first side (7) of the filter element (5) and second part of the flow apertures (11) is facing the second side (9) of the filter element (5), defining a flow path (19) for ground water from the first part of the flow apertures (11) through the filter element (5) to the second part of the flow apertures (11).

2. Ground water flow device according to claim 1, wherein the filter element (5) is exchangeable held in the inner space (17) of the tube (13), and in particular comprises a rigid frame (23) and filter material (25) extending within the rigid frame (23).

3. Ground water flow device according to claim 1, or 2, wherein at least one end of the at least one tube (13) is provided with a closure (21) for sealingly closing the inner space (17) from an environment of the ground water flow device (1), and in particular both ends of the at least one tube (13) are provided with a closure (21, 22).

4. Ground water flow device according to any one or more of the previous claims, wherein the support element (3) has complementary coupling elements (27, 29) for coupling a plurality of ground water flow devices (1) to each other, in particular the complementary coupling elements (27, 29) extend parallel to the longitudinal direction (15), and more in particular on opposite sides of the tube (13).

5. Ground water flow device according to claim 4, wherein the complementary coupling elements (27, 29) are provided with sealing means (31) for sealing the coupling of the plurality of ground water flow devices (1).

6. Ground water flow device according to any one or more of the previous claims, comprising a plurality of tubes (13), and a plurality of filter elements (5), each tube (13) sealingly holding one of the filter elements (5) and being provided with flow apertures (11).

7. Ground water flow device according to any one or more of the previous claims, wherein the support element (3) comprises at least one water impermeable sheet (26) extending parallel to the longitudinal direction (15) and being sealingly connected to an outside part of the at least one tube (13).

8. Ground water flow device according to claim 6 and 7, wherein the water impermeable sheet (26) extends between and connects two of the plurality of tubes (13).

9. Ground water flow system comprising a plurality of ground water flow devices (1) according to any one or more of the previous claims.

10. Ground water flow system comprising at least one ground water flow device according to any one or more of claims 1-8, and a water level measuring device (33) for measuring a water level in the tube (13), preferably for measuring water levels in the tube (13) at the first side (7) and the second side (9) of the filter element (5).

11. Method for controlling a ground water flow, comprising a step of introducing into the ground at least one ground water flow device (1) according to any one or more of claims 1-8.

12. Method according to claim 11, comprising a step of replacing the filter element (5) while the support element (3) is located in the ground.

13. Method according to claim 11, or 12, comprising a step of measuring a water level in the tube (13), in particular a step of measuring water levels at the first side (7) and the second side (9) of the filter element (5), and more in particular the filter element (5) is replaced if the water level in the tube differs from a reference value, further more in particular, the filter element is replaced if the water levels at the first side (7) and the second side (9) of the filter element (5) differ more than a predetermined amount.

14. Method according to claim 12, or claim 12 in combination with claim 13, wherein the step of replacing the filter element (5) is preceded by a step of removing soil from the inner space (17) of the tube (13), in particular the step of removing soil from the inner space (17) of the tube (13) is performed by directing a jet flow of water into the inner space (17) of the tube (13) and/or by sucking the soil away.

15. Method according to claim 12, or claim 12 in combination with claim 13 and/or 14, wherein during the step of replacing the filter element (5), the inner space (17) is kept substantially free from soil by inserting water into the inner space (17) of the tube (13).

## Patentansprüche

1. Grundwasserströmungsvorrichtung mit einem Stützelement (3) und einem Filterelement (5), wobei das Filterelement (5) eine erste Seite (7) und eine zweite Seite (9) aufweist, die von der ersten Seite (7) abgewandt ist, wobei das Stützelement (3) Strömungsöffnungen (11) aufweist, die groß genug sind, um den Durchlauf von Wasser und Bodenpartikeln zu ermöglichen, und wobei das Filterelement (5) Porenöffnungen aufweist, die groß genug sind, um den Durchlauf von Wasser von der ersten Seite (7) zur zweiten Seite (9) zu ermöglichen und klein genug sind, um den Durchlauf von Bodenpartikeln zu blockieren,
**dadurch gekennzeichnet, dass**
das Stützelement (3) starr ist und mindestens ein Rohr (13) umfasst, das eine Längsrichtung (15) und einen in Längsrichtung (15) verlaufenden Innenraum (17) aufweist, wobei das mindestens eine Rohr (13) das Filterelement (5) im Innenraum (17) abdichtend hält, wobei das Filterelement (5) sich in Längsrichtung (15) erstreckt, und das mindestens eine Rohr (13) mit den Strömungsöffnungen (11) versehen ist, die über einen Umfang des Rohres (13) so verteilt sind, dass ein erster Teil der Strömungsöffnungen (11) der ersten Seite (7) des Filterelements (5) zugewandt ist und ein zweiter Teil der Strömungsöffnungen (11) der zweiten Seite (9) des Filterelements (5) zugewandt ist und einen Strömungspfad (19) für Grundwasser vom ersten Teil der Strömungsöffnungen (11) durch das Filterelement (5) zum zweiten Teil der Strömungsöffnungen (11) definieren.

2. Grundwasserströmungsvorrichtung nach Anspruch 1, wobei das Filterelement (5) im Innenraum (17) des Rohres (13) austauschbar gehalten ist und insbesondere einen starren Rahmen (23) und ein sich innerhalb des starren Rahmens (23) erstreckendes Filtermaterial (25) umfasst.

3. Grundwasserströmungsvorrichtung nach Anspruch 1 oder 2, wobei mindestens ein Ende des mindestens einen Rohres (13) mit einem Verschluss (21) zum dichten Verschließen des Innenraums (17) aus einer Umgebung der Grundwasserströmungsvorrichtung (1) versehen ist, und insbesondere beide Enden des mindestens einen Rohres (13) mit einem Verschluss (21, 22) versehen sind.

4. Grundwasserströmungsvorrichtung nach einem oder mehreren der vorstehenden Ansprüche, wobei das Stützelement (3) komplementäre Kupplungselemente (27, 29) zum Koppeln einer Vielzahl von Grundwasserströmungsvorrichtungen (1) miteinander aufweist, wobei insbesondere die komplementären Kupplungselemente (27, 29) sich parallel zur Längsrichtung (15), insbesondere auf gegenläufigen Seiten des Rohres (13) erstrecken.

5. Grundwasserströmungsvorrichtung nach Anspruch 4, wobei die komplementären Kupplungselemente (27, 29) mit Dichtungsmitteln (31) zum Abdichten der Kupplung der Vielzahl von Grundwasserströmungsvorrichtungen (1) versehen sind.

6. Grundwasserströmungsvorrichtung nach einem oder mehreren der vorstehenden Ansprüche, umfassend eine Vielzahl von Rohren (13) und eine Vielzahl von Filterelementen (5), wobei jedes Rohr (13) eines der Filterelemente (5) abdichtend hält und mit Strömungsöffnungen (11) versehen ist.

7. Grundwasserströmungsvorrichtung nach einem oder mehreren der vorstehenden Ansprüche, wobei das Stützelement (3) mindestens eine wasserundurchlässige Folie (26) umfasst, die sich parallel zur Längsrichtung (15) erstreckt und mit einem äußeren Teil des mindestens einen Rohres (13) abdichtend verbunden ist.

8. Grundwasserströmungsvorrichtung nach Anspruch 6 und 7, wobei sich die wasserundurchlässige Folie (26) zwischen zwei der Vielzahl von Rohren (13) erstreckt und diese verbindet.

9. Grundwasserströmungssystem, umfassend eine Vielzahl von Grundwasserströmungsvorrichtungen (1) gemäß einem oder mehreren der vorstehenden Ansprüche.

10. Grundwasserströmungssystem mit mindestens einer Grundwasserströmungsvorrichtung nach einem oder mehreren der Ansprüche 1-8 und einer Wasserstandsmessvorrichtung (33) zum Messen eines Wasserspiegels in dem Rohr (13), vorzugsweise zum Messen von Wasserständen in dem Rohr (13) an der ersten Seite (7) und der zweiten Seite (9) des Filterelements (5).

11. Verfahren zum Steuern einer Grundwasserströmung, umfassend einen Schritt des Einbringens mindestens einer Grundwasserströmungsvorrichtung (1) in den Boden nach einem oder mehreren der Ansprüche 1-8.

12. Verfahren nach Anspruch 11, umfassend einen Schritt zum Ersetzen des Filterelements (5), während sich das Stützelement (3) im Boden befindet.

13. Verfahren nach Anspruch 11 oder 12, umfassend einen Schritt zum Messen eines Wasserspiegels in dem Rohr (13), insbesondere einen Schritt zum Messen von Wasserständen an der ersten Seite (7) und der zweiten Seite (9) des Filterelements (5), und insbesondere das Filterelement (5) ersetzt wird, wenn der Wasserstand in dem Rohr von einem Referenzwert abweicht, ferner insbesondere das Filterelement, wenn die Wasserstände an der ersten Seite (7) und der zweiten Seite (9) des Filterelements (5) mehr als von einer vorbestimmten Menge abweicht.

14. Verfahren nach Anspruch 12 oder Anspruch 12 in Kombination mit Anspruch 13, wobei dem Schritt des Austausches des Filterelements (5) ein Schritt zum Entfernen von Schmutz aus dem Innenraum (17) des Rohres (13) vorausgeht, insbesondere der Schritt zum Entfernen von Schmutz aus dem Innenraum (17) des Rohres (13) durch Leiten eines Wasserstrahls in den Innenraum (17) des Rohres (13) und/oder durch das Absaugen des Bodens.

15. Verfahren nach Anspruch 12 oder Anspruch 12 in Kombination mit Anspruch 13 und/oder 14, wobei während des Schrittes des Austausches des Filterelements (5) der Innenraum (17) im Wesentlichen frei von Schmutz gehalten wird, indem Wasser in den Innenraum (17) des Rohres (13) eingebracht wird.

## Revendications

1. Dispositif d'écoulement des eaux souterraines comprenant un élément de support (3) et un élément de filtrage (5), dans lequel l'élément filtrant (5) présente un premier côté (7) et un second côté (9) opposés au premier côté (7), le filtre l'élément de support (3) comprend des orifices d'écoulement (11) suffisamment grands pour permettre le passage d'eau et de particules de sol, et l'élément filtrant (5) comprend des ouvertures de pores suffisamment grandes pour permettre le passage de l'eau du premier côté (7) au second côté (9) et suffisamment petit pour bloquer le passage des particules de sol ca
ractérisé en ce que
l'élément de support (3) est rigide et comprend au moins un tube (13) qui présente une direction longitudinale (15) et un espace intérieur (17) s'étendant dans la direction longitudinale (15), dans lequel l'au moins un tube (13) maintient de manière étanche l'élément filtrant (5) dans l'espace intérieur (17), l'élément filtrant (5) s'étendant dans la direction longitudinale (15) et ledit au moins un tube (13) étant pourvu d'orifices d'écoulement (11), qui sont répartis sur une circonférence du tube (13) telle qu'une première partie des ouvertures d'écoulement (11) fait face au premier côté (7) de l'élément filtrant (5) et à la seconde partie des ouvertures d'écoulement (11) en regard du second côté (9) de l'élément filtrant (5), définissant un chemin d'écoulement (19) pour les eaux souterraines de la première partie des ouvertures d'écoulement (11) à travers l'élément filtrant (5) jusqu'à la seconde partie des ouvertures d'écoulement (11).

2. Dispositif d'écoulement des eaux souterraines selon la revendication 1, dans lequel l'élément filtrant (5) est maintenu de manière interchangeable dans l'espace intérieur (17) du tube (13), et comprenant notamment un cadre rigide (23) et un matériau filtrant (25) s'étendant à l'intérieur du cadre rigide (23).

3. Dispositif d'écoulement des eaux souterraines selon la revendication 1 ou 2, dans lequel au moins une extrémité dudit au moins un tube (13) est muni d'une fermeture (21) pour fermer de manière étanche l'espace intérieur (17) de l'environnement du dispositif d'écoulement des eaux souterraines (1), et en particulier les deux extrémités dudit au moins un tube (13) sont munies d'une fermeture (21, 22).

4. Dispositif d'écoulement des eaux souterraines selon l'une quelconque ou plusieurs des revendications précédentes, dans lequel l'élément de support (3) présente des éléments d'accouplement complémentaires (27, 29) permettant de coupler plusieurs dispositifs d'écoulement des eaux souterraines (1) entre eux, en particulier les éléments d'accouplement complémentaires (27, 29) s'étendent parallèlement à la direction longitudinale (15), et plus particulièrement sur des côtés opposés du tube (13).

5. Dispositif d'écoulement des eaux souterraines selon la revendication 4, dans lequel les éléments d'accouplement complémentaires (27, 29) sont pourvus de moyens d'étanchéité (31) pour étanchéifier l'accouplement de la pluralité de dispositifs d'écoulement des eaux souterraines (1).

6. Dispositif d'écoulement des eaux souterraines selon l'une quelconque ou plusieurs des revendications précédentes, comprenant une pluralité de tubes (13) et une pluralité d'éléments filtrants (5), chaque tube (13) maintenant de manière étanche l'un des éléments filtrants (5) et étant pourvu d'ouvertures d'écoulement (11).

7. Dispositif d'écoulement des eaux souterraines selon l'une quelconque ou plusieurs des revendications précédentes, dans lequel l'élément de support (3) comprend au moins une feuille imperméable à l'eau (26) s'étendant parallèlement à la direction longitudinale (15) et étant reliée de manière étanche à une partie extérieure dudit au moins un tube (13).

8. Dispositif d'écoulement des eaux souterraines selon les revendications 6 et 7, dans lequel la feuille imperméable à l'eau (26) s'étend entre et relie deux de la pluralité de tubes (13).

9. Système d'écoulement des eaux souterraines comprenant une pluralité de dispositifs d'écoulement des eaux souterraines (1) selon une ou plusieurs des revendications précédentes.

10. Système d'écoulement des eaux souterraines comprenant au moins un dispositif d'écoulement des eaux souterraines selon une ou plusieurs des revendications 1 à 8, et un dispositif de mesure du niveau d'eau (33) pour mesurer un niveau d'eau dans le tube (13), de préférence pour mesurer les niveaux d'eau dans le tube (13) du premier côté (7) et du second côté (9) de l'élément filtrant (5).

11. Procédé de contrôle d'un écoulement des eaux souterraines, comprenant une étape d'introduction dans le sol d'au moins un dispositif d'écoulement des eaux souterraines (1) selon l'une quelconque des revendications 1 à 8.

12. Procédé selon la revendication 11, comprenant une étape de remplacement de l'élément filtrant (5) pendant que l'élément de support (3) est situé dans le sol.

13. Procédé selon la revendication 11 ou 12, comprenant une étape de mesure du niveau d'eau dans le tube (13), en particulier une étape de mesure des niveaux d'eau du premier côté (7) et du second côté (9) de l'élément filtrant (5), et plus particulièrement on remplace l'élément filtrant (5) si le niveau d'eau dans le tube s'écarte d'une valeur de référence, et plus particulièrement on remplace l'élément filtrant si les niveaux d'eau du premier côté (7) et du second côté (9) de l'élément filtrant (5) s'écartent de plus d'une quantité prédéterminée.

14. Procédé selon la revendication 12 ou la revendication 12 en combinaison avec la revendication 13, dans lequel l'étape de remplacement de l'élément filtrant (5) est précédé d'une étape d'élimination de la terre de l'espace intérieur (17) du tube (13), en particulier l'étape d'élimination de la terre de l'espace intérieur (17) du tube (13) consiste à diriger un jet d'eau dans l'espace interne (17) du tube (13) et / ou en aspirant le sol vers l'extérieur.

15. Procédé selon la revendication 12 ou la revendication 12 en combinaison avec les revendications 13 et/ou 14, dans lequel au cours de l'étape de remplacement de l'élément filtrant (5), on injecte de l'eau dans l'espace intérieur (17) du tube (13) pour maintenir l'espace intérieur (17) sensiblement exempt de sol.
